# EUROPEAN PATENT APPLICATION

(11) **EP 4 353 521 A1**
(43) Date of publication of application: **17.04.2024**
(21) Application number: 22820488.9
(22) Date of filing: 03.06.2022
(51) Int. Cl.: B60L 53/35, B60L 15/20, B60L 3/00, G01L 1/18, G01S 13/08, B60L 53/36

(54) **CHARGING CART FOR CHARGING ELECTRIC VEHICLE**

(30) Priority: 07.06.2021 KR 20210073578; 03.12.2021 KR 20210171983; 20.01.2022 KR 20220008219
(71) Applicant: Evar Inc., Gyeonggi-do 13449 (KR)
(72) Inventor: LEE, Hun, Suwon-si Gyeonggi-do 16509 (KR); SHIN, Dong Hyuk, Seongnam-si Gyeonggi-do 13599 (KR); KIM, Ki Jae, Seoul 05809 (KR)
(74) Representative: Frenkel, Matthias Alexander
(86) International application number: PCT/KR2022/007915
(87) International publication number: WO 2022/260360

(57) **Abstract**

Disclosed is a charging cart for charging an electric vehicle according to various embodiments of the present invention for solving the described problem. The charging cart for charging an electric vehicle may comprise: a body; a handle extending from the body so as to come in contact with a user's body; a sensor unit connected to the handle so as to acquire sensing information corresponding to external force related to contact with the user's body; a travel unit for permitting movement of the body; a sensing unit for acquiring travel state information related to whether the body is movable; a driving unit for applying driving force to the travel unit; and a control unit for controlling the driving unit on the basis of the travel state information and the sensing information corresponding to the external force.

## Description

### [Technical Field]

The present invention relates to a charging device, and more specifically, to a mobile charging cart for charging an electric vehicle.

### [Background Art]

Recently, due to various problems such as fossil fuel depletion and environmental pollution, research and development on transportation vehicles for solving these problems are being actively conducted. As such transportation vehicles, electric vehicles are representative transportation vehicles that have been commercialized.

Meanwhile, whenever electric vehicles are brought up, charging of electric vehicles is also mentioned. Installing electric vehicle charging devices in all parking spaces in building parking lots of apartments and buildings is realistically too costly and is inefficient in that there are regular vehicles in addition to electric vehicles.

An alternative in this situation may be to install electric vehicle charging devices only in some parking spaces. In this case, there are an efficiency problem that parking spaces remain empty and a problem that there may not be enough charging devices when many electric vehicles enter the parking lot.

Due to the above problems, an emerging alternative is to perform charging by sharing a charging cart. In general, a charging cart includes a charging module and a combination of electronic elements, and therefore the charging module is somewhat heavy (for example, about 700 kg). Thus, it is difficult for a user to apply a force to move the charging cart. For example, a charging cart may move on a downhill road or an uphill road irrespective of the user's operation intention, which may cause safety problems.

Therefore, in the art, there may be a need for a charging cart for charging an electric vehicle for providing convenience in movement when a user's operation intention is confirmed through various sensors to control the movement of the charging cart and move the charging cart to charge an electric vehicle.

### (Related Art Documents)

### (Patent Documents)

Korean Utility Model Publication No. 20-2021-0000504

### [Disclosure]

### [Technical Problem]

The present invention is directed to providing a charging cart for charging an electric vehicle in which a user's operation intention is ascertained through various sensors to control the movement of the charging cart.

The technical problems to be solved by the present invention are not limited to the above-described problems, and any other technical problems that are not described herein will be clearly understood from the following description by those skilled in the art to which the present invention pertains.

.

### [Technical Solution]

One aspect of the present invention provides a charging cart for charging an electric vehicle, the charging cart including a body, a sensor unit connected to the body and configured to collect external force sensing information, a handle connected to the sensor unit, a detection unit configured to acquire traveling state information of the body, a traveling unit connected to the body, a driving unit configured to apply a driving force to the traveling unit, and a control unit configured to control whether to move the body based on the external force sensing information and the traveling state information.

The control unit may control the driving unit by reflecting the driving state information with preference over the external force sensing information.

The sensor unit may include a first sensor unit and a second sensor unit that are individually connected to both ends of the handle, and the external force sensing information may include rotation calculation information generated based on a size difference between first sensing information acquired through the first sensor unit and second sensing information acquired through the second sensor unit and speed calculation information generated based on a size of each piece of sensing information.

The control unit may control the driving unit or the traveling unit based on the rotation calculation information and the speed calculation information.

The traveling unit may include a first traveling unit and a second traveling unit configured to allow traveling related to each of a left side and a right side of the body, and the control unit may control the driving unit based on the rotation calculation such that power applied to the first traveling unit is different from power applied to the second traveling unit.

The detection unit may include a piezoelectric sensor module provided in the handle to detect a physical pressure, and a proximity sensor module provided in the handle or outside the handle to detect electromagnetic waves reflected after being emitted toward a user.

The detection unit may include a camera module that acquires image information related to a user and generates the traveling state information based on the acquired image information.

The charging cart may further include a traveling image acquisition unit configured to acquire traveling image information related to movement of the body, and the control unit may generate risk detection information by analyzing an image of the driving image information.

The control unit may control the driving unit or the traveling unit by reflecting the risk detection information with preference over the traveling state information.

The detection unit may include a piezoelectric sensor module provided in the handle to detect physical pressure, or a proximity sensor module provided in the handle or outside the handle to detect electromagnetic waves reflected after being emitted toward a user, and when the external force sensing information is continuously detected from the sensor unit but a signal detected from the piezoelectric sensor module or the proximity sensor module disappears, the control unit stops an operation of the driving unit or the traveling unit or lowers power.

Other specific details of the present invention are included in the detailed description and drawings.

### [Advantageous Effects]

According to various embodiments of the present invention, there can be provided a charging cart for charging an electric vehicle in which a user's operation intention is ascertained through various sensors to control the movement of the charging cart.

The effects of the present invention are not limited to the effects described above, and other effects that are not described will be clearly understood from the following description by those skilled in the art.

### [Description of Drawings]

Various aspects will now be described with reference to the drawings, wherein like reference numerals are used to generally refer to similar components. In the following embodiments, for purposes of description, numerous specific detailed items are presented to provide a thorough understanding of one or more aspects. However, it may be apparent that such aspect(s) may be performed without these detailed items.
FIG. 1 is a diagram illustrating an electric vehicle charging system using a charging cart according to one embodiment of the present invention.
FIG. 2 is a block diagram of a charging cart according to one embodiment of the present invention.
FIG. 3 is an exemplary view of the charging cart according to one embodiment of the present invention.
FIG. 4 is an exemplary top view of the charging cart according to one embodiment of the present invention.
FIG. 5 is a perspective top view of the charging cart according to one embodiment of the present invention.
FIG. 6 is an exemplary view for describing a detection unit according to one embodiment of the present invention.
FIG. 7 is an exemplary view for describing a detection unit according to another embodiment of the present invention.
FIG. 8 is an exemplary view for describing a detection unit according to still another embodiment of the present invention.

### [Best Modes of the Invention]

Various embodiments and/or aspects will now be described with reference to the drawings. In the following description, for purposes of the description, numerous specific detailed items are presented to help overall understanding of one or more aspects. However, it will also be appreciated by those skilled in the art that the aspect(s) may be carried out without these detailed items. The following disclosure and the accompanying drawings disclose specific exemplary aspects of one or more aspects in detail. However, these aspects are exemplary, some of the various methods in the principles of the various aspects may be used, and the disclosed descriptions are intended to include all these aspects and their equivalents. Specifically, as used herein, "embodiment," "example," "aspect," "exemplary," and the like are not to be understood to mean that any described aspect or design is better or more advantageous than other aspects or designs.

Hereinafter, the same reference numerals denote the same or similar components throughout the drawings, and overlapping descriptions thereof will be omitted. Further, in the description of the embodiments disclosed in the specification, when it is determined that detailed description of related known technologies may obscure the principle of the embodiments disclosed in the specification, the detailed description thereof will be omitted. In addition, the accompanying drawings are only for easy understanding of the embodiments disclosed in the specification, and the technical spirit disclosed in the specification is not limited by the accompanying drawings.

Although "first," "second," and the like are used to describe various elements or components, these elements or components are not limited by these terms. These terms are only used to distinguish one element or component from another. Accordingly, a first element or component mentioned below may be a second element or component within the spirit of the present invention.

Unless otherwise defined, all terms (including technical and scientific terms) used herein have the same meaning as commonly understood by one having ordinary knowledge in the art to which the present invention belongs. Further, terms defined in a commonly used dictionary are not to be interpreted ideally or excessively unless otherwise defined.

In addition, the term "or" is intended to mean an inclusive "or" rather than an exclusive "or." That is, unless otherwise specified or clear from context, "X uses A or B" is intended to mean one of the natural implicit substitutions. That is, "X uses A or B" may include any case in which X uses A, X uses B, or X uses both A and B. It should also be understood that the term "and/or" as used herein refers to and includes all possible combinations of one or more of the listed related items.

Further, it should be understood that the terms "comprises" and/or "comprising" mean that the feature and/or component is present, but does not exclude the presence or addition of one or more other features, components, and/or groups thereof. In addition, unless otherwise specified or clear from the context as referring to a singular form, the singular form in the specification and claims should generally be construed to mean "one or more."

When a first component is mentioned as being "connected" or "linked" to a second component, it should be understood that the first component may be directly connected or linked to the second component, or a third component may be present therebetween. On the other hand, when it is mentioned that a first component is "directly connected" or "directly linked" to a second element, it should be understood that there is no other component therebetween.

The words "module" and "part" for the components used in the following description are given or mixed in consideration of only the ease of writing the specification, and do not have a distinct meaning or role by themselves.

Reference to a first element or layer "above" or "on" a second element or layer includes all cases in which the first element or layer is directly on the second as well as that in which a third element or layer is interposed therebetween. On the other hand, a case in which an element is referred to as "directly on" or "immediately above" is a case in which no other element or layer is interposed therebetween.

Spatially relative terms "below," "beneath," "lower," "above," "upper," and the like may be used to easily describe a component or a correlation with other components as shown in the drawings. Spatially relative terms should be understood as terms including different directions of an element during use or operation in addition to a direction shown in the drawings.

For example, when components shown in the drawing are reversed, a component described as "below" or "beneath" another component may be placed "above" the other component. Thus, the example term "below" may include both orientations of below and above. Components may also be oriented in other directions, and accordingly, spatially relative terms may be interpreted according to orientation.

Objects and effects of the present invention, and technical configurations for achieving them will be apparent with reference to the embodiments to be described below in detail with the accompanying drawings. In the description of the present invention, when it is determined that detailed description of a well-known function or configuration may unnecessarily obscure the gist of the present invention, the detailed description thereof will be omitted. Further, the terms to be described below are terms defined in consideration of functions in the present invention and thus may vary according to intentions or customs of users and operators.

However, the present invention is not limited to the embodiments to be disclosed below and may be implemented in various different forms. Only the present embodiments are provided so that the present invention is complete, and to completely convey the scope of the disclosure to those skilled in the art, and the present invention is only defined by the scope of the claims. Accordingly, the definition should be made based on the content throughout the specification.

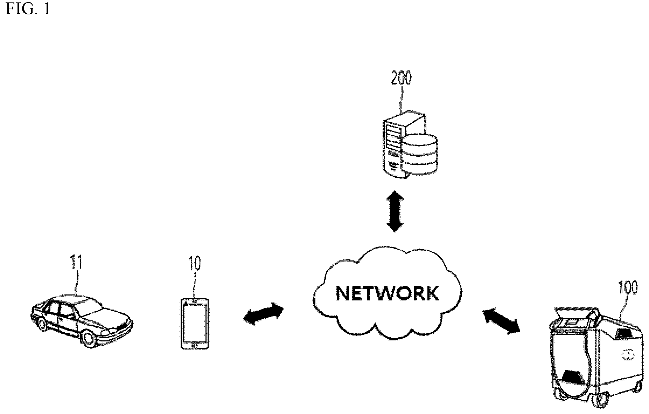

FIG. 1 is a diagram illustrating an electric vehicle charging system using a charging cart according to one embodiment of the present invention.

Referring to FIG. 1, the electric vehicle charging system using the charging cart according to one embodiment of the present invention may include a user terminal 10, a management server 200, and a charging cart 100. Here, the vehicle charging system using the charging cart shown in FIG. 1 follows one embodiment, and components thereof are not limited to the embodiment shown in FIG. 1 and may be added, changed, or deleted as necessary.

According to one embodiment of the present invention, the user terminal 10, the management server 200, and the charging cart 100 may mutually transmit or receive information through a network. The network presented here may include various wired communication systems such as a public switched telephone network (PSTN), an x digital subscriber line (xDSL), a rate adaptive DSL (RADSL), a multi rate DSL (MDSL), a very high speed DSL (VDSL), a universal asymmetric DSL (UADSL), a high bit rate DSL (HDS), and a local area network (LAN).

In addition, the network presented here may include various wireless communication systems such as code division multi access (CDMA), time division multi access (TDMA), frequency division multi access (FDMA), orthogonal frequency division multi access (OFDMA), single carrier-FDMA (SC-FDMA), and other systems.

The network according to one aspect of the present invention may be provided regardless of a communication type such as wired or wireless communication and may be provided using any of various communication networks such as a personal area network (PAN) and a wide area network (WAN). In addition, the network may be the well-known World Wide Web (WWW) and may be implemented using a wireless transmission technology used for short-range communication, such as infrared data association (IrDA) or Bluetooth. The techniques described herein may be used in other networks as well as the above-described networks.

According to one embodiment of the present invention, the user terminal 10 may have a mechanism for communication with other entities through a network and may be any type of entity in a system for providing electric vehicle charging services. For example, the user terminal 10 may include a personal computer (PC), a notebook, a mobile terminal, a smartphone, a tablet PC, and the like and may include any type of terminal that can access wired/wireless networks. In addition, the user terminal 10 may include an arbitrary server implemented by at least one of an agent, an application programming interface (API), and a plug-in. In addition, the user terminal 10 may include an application source and/or a client application. As an example, the user terminal 10 may include an arbitrary terminal related to a user who requests a service for charging his or her electric vehicle 11. For example, a user may transmit or receive information for obtaining permission to use the charging cart 100 or information about a calculation of a fee according to the use of the charging cart 100 with the management server 200 through the user terminal 10. That is, a user may exchange information with the management server 200 using the user terminal 10 and thus may charge his or her electric vehicle 11 using the charging cart 100.

According to one embodiment of the present invention, the management server 200 may be a subsystem that services intensive processing functions in a local area network. The management server 200 may monitor or control the entire network by controlling arbitrary functions related to the content disclosed in the present invention and managing data or may serve to assist in connection with other networks through a mainframe or public network or assist in sharing software resources such as data, programs, and files, or hardware resources such as modems, fax machines, and other equipment. The management server 200 may be a computer that discloses information stored in a hard disk thereof to the outside in a special form. In general, various types of information may be managed in the management server 200, and general users may access the management server 200 using their terminals and may use information provided by the management server 200. In one embodiment, the management server 200 may control, store, transmit, or receive information to share the information with the user terminal 10 or the charging cart 100.

As a specific example, the management server 200 may receive information related to a request for permission to use the charging cart 100 from the user terminal 10. In addition, the management server 200 may transmit information about a position of the charging cart 100, information about charging fee calculation, or information about a charging amount setting to the user terminal 10 in response to a request for permission for use. However, information received and transmitted by the management server is not limited thereto, and a wider variety of information for a charging service of the electric vehicle 11 may be transmitted or received.

According to one embodiment, the management server 200 may exchange information by communicating with an external server (not shown). In addition, the management server 200 may store arbitrary information/data in a database, a computer-readable medium, or the like. The computer-readable medium may include a computer-readable storage medium and a computer-readable communication medium. Such a computer-readable storage medium may include any type of storage medium in which programs and data are stored to be readable by a computer system. According to one aspect of the present invention, the computer-readable storage medium may include a read-only memory (ROM), a random access memory (RAM), a compact disc (CD)-ROM, a digital video disc (DVD)-ROM, a magnetic tape, a floppy disk, an optical data storage device, and the like. In addition, the computer-readable communication medium may also be implemented in the form of carrier waves (for example, transmission via the Internet). Additionally, such media may be distributed to systems connected through a network to store computer readable codes and/or commands in a distribution scheme.

According to one embodiment of the present invention, the charging cart 100 may include a charging module for charging the electric vehicle 11. The electric vehicle 11 may be a vehicle that moves by generating a driving force through a battery engine. The electric vehicle 11 may be a vehicle that may travel by driving an electric motor using only electric energy supplied from a charged battery cell as a power source without an internal combustion engine. The electric vehicle 11 does not use fossil fuels during traveling and does not emit carbon dioxide or nitrogen oxides, and thus is environmentally friendly. In an embodiment, the electric vehicle may include a hybrid vehicle that moves by generating a driving force using a battery engine and an internal combustion engine. The charging cart 100 may include a charging connector electrically connected to a charging port of the electric vehicle 11 and may supply power to the electric vehicle 11 through the charging connector.

The charging cart 100 may be provided to move to be shared and used in a parking space by a plurality of users. In an embodiment, the charging cart 100 may include a traveling unit 140 that allows a body 110 to move and thus may move in a parking space in which a plurality of vehicles are parked. For example, users may park their electric vehicle 11 and move the charging cart 100 to a position at which their electric vehicle 11 is parked to supply power, thereby charging the electric vehicle 11.

According to one embodiment, the charging cart 100 may be an electric cart that may be moved with electric assistance to reduce a force for movement, that is, a user's labor. In general, a cart for charging the electric vehicle 11 is formed through a combination of a charging module (for example, an energy storage device) and electronic elements for the charging module and thus may be provided in a somewhat heavy form (for example, about 700 kg). In this case, much labor may be required for a user to move the cart to a position at which his or her vehicle is parked. In particular, when there is an uphill road, a downhill road, or a speed bump on a movement path of the charging cart, much force from a user may be required to control the movement of the charging cart. When movement control is difficult because much force is required to control the movement of the cart, it may cause serious stability problems.

According to an embodiment, since the charging cart is provided to have a relatively heavy weight, when a user's operation intention is not immediately recognized to control traveling, it may cause a safety risk. As a specific example, in a situation in which a user steers the charging cart to move along a downhill road, when a user's hand deviates from a handle, an accident may be prevented only when the charging cart immediately detects the deviation and generates sensing information related to the stop.

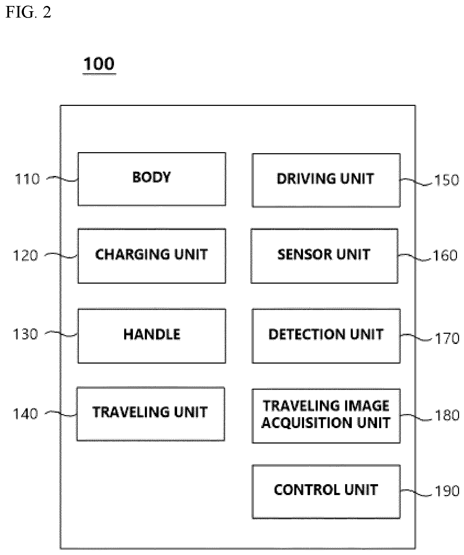

The charging cart 100 according to one embodiment of the present invention can assist in moving the charging cart by detecting a user's operating intention through various sensors. For example, when a user moves the charging cart 100 to charge his or her electric vehicle 11, the user's operation intention to move the charging cart 100 may be ascertained through various sensors provided in the charging cart 100, and in response to the user's operation intention, power may be provided to the charging cart 100 to control the movement of the charging cart 100 using less force. A method of ascertaining a user's operation intention using a charging cart and a method of controlling the movement of the charging cart through the method will be described in detail below with reference to FIGS. 2 to 8.

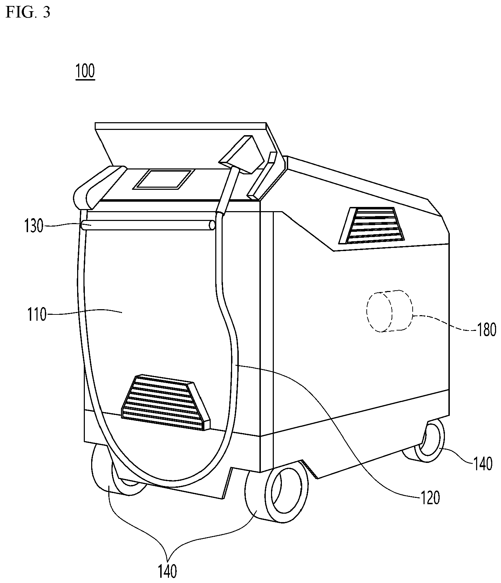

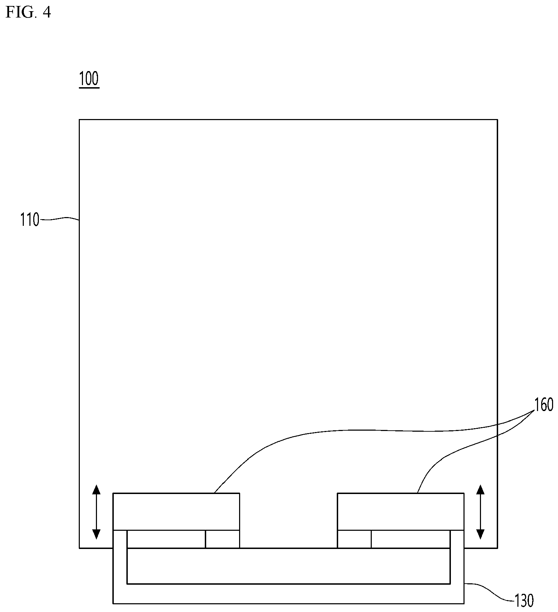

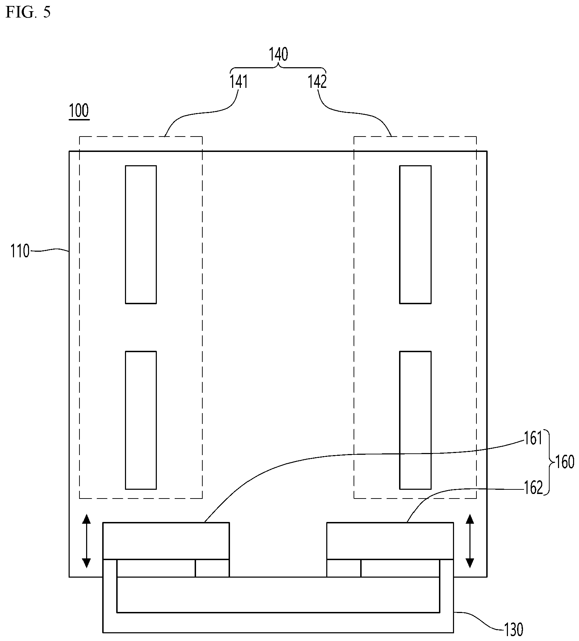

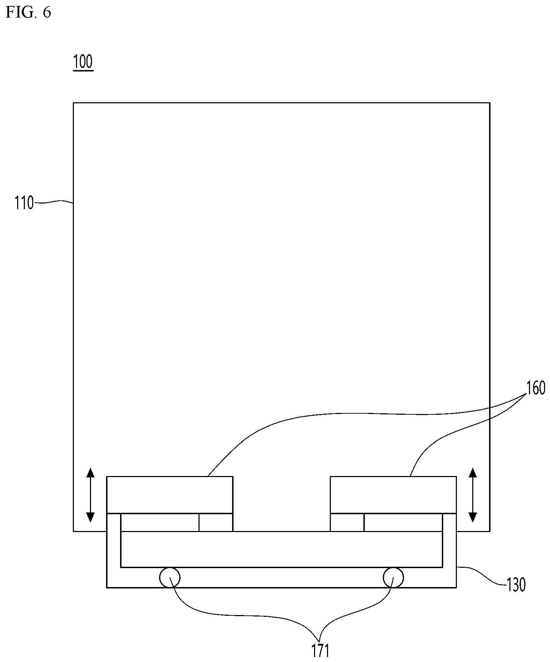

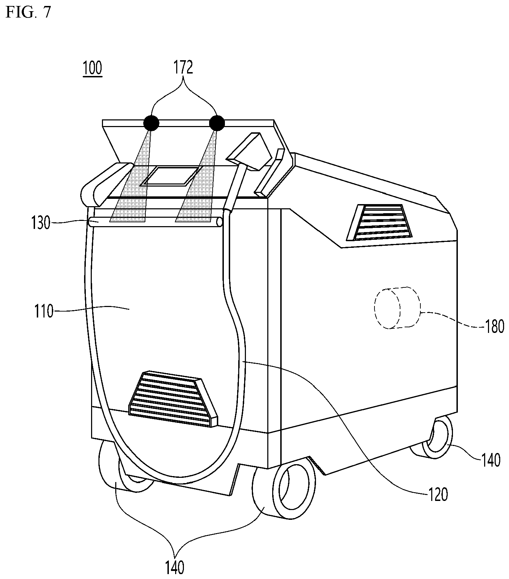

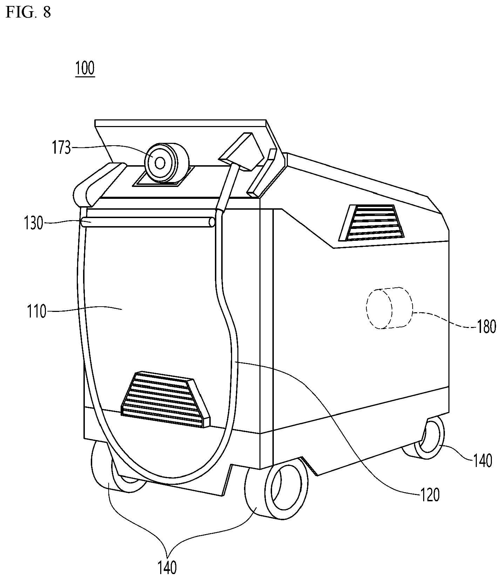

FIG. 2 is a block diagram of a charging cart according to one embodiment of the present invention. FIG. 3 is an exemplary view of the charging cart according to one embodiment of the present invention. FIG. 4 is an exemplary top view of the charging cart according to one embodiment of the present invention. FIG. 5 is a perspective top view of the charging cart according to one embodiment of the present invention. FIG. 6 is an exemplary view for describing a detection unit according to one embodiment of the present invention. FIG. 7 is an exemplary view for describing a detection unit according to another embodiment of the present invention. FIG. 8 is an exemplary view for describing a detection unit according to still another embodiment of the present invention.

FIG. 2 is a block diagram of the charging cart according to one embodiment of the present invention. As shown in FIG. 2, a charging cart 100 may include a body 110, a charging unit 120, a handle 130, a traveling unit 140, a driving unit 150, a sensor unit 160, a detection unit 170, a traveling image acquisition unit 180, and a control unit 190. The components shown in FIG. 2 are exemplary, and additional components may be present, or some of the components shown in FIG. 2 may be omitted.

According to one embodiment of the present invention, the charging cart 100 may include the body 110. The body 110 may be a component that forms a main body of the charging cart 100 and may form an internal space that may include an electric energy storage device, a charging device, and a motor. The internal space formed by the body 110 may further include various components for charging an electric vehicle in addition to the components described above.

According to one embodiment of the present invention, the charging cart 100 may include the charging unit 120 for charging an electric vehicle. In an embodiment, the charging unit 120 may be provided to be connected to a portion of the body 110. The charging unit 120 may be electrically connected to the electric energy storage device. As shown in FIG. 3, the charging unit 120 may include a docking connector, which is docked with the charging port of an electric vehicle 11, at one end portion thereof. The electric energy storage device may be a member that receives electric energy from a charging station and supplies the received electric energy to the electric vehicle. For example, the electric energy storage device may be a secondary battery (fuel cell). Electrical energy from the electric energy storage device may be supplied to the electric vehicle 11 through the charging device, and accordingly, a user may charge the electric vehicle 11 using the charging cart.

According to one embodiment of the present invention, the charging cart 100 may include the handle 130. The handle 130 may be an area that is held by a user to move the body 110. As shown in FIG. 3, the handle 130 may be formed to extend from the body 110. For example, the handle 130 may be connected to a portion inside the body 110. In an embodiment, a sensor module may be provided in a partial area inside the body 110 connected to the handle 130. In this case, the sensor module (that is, a sensor unit) may be used to detect an external force generated when a user's body comes into contact with the handle 130. The user may move the charging cart 100 by applying an external force while holding the handle 130 with a hand. As an example, the handle 130 may be provided in a handle shape held by the user, and the user may manipulate the intensity and direction of a force applied while holding the handle 130, thereby controlling the movement speed and movement direction of the charging cart 100.

According to one embodiment of the present invention, the charging cart 100 may include the traveling unit 140 that allows the body 110 to move. The traveling unit 140 may include one or more wheels and may be provided on a lower surface of the body 110. The traveling unit 140 may turn in one direction or another direction to provide convenience in moving the charging cart 100. According to an embodiment, the traveling unit 140 may turn through a driving force applied from the driving unit 150. The traveling unit 140 may be driven according to revolutions per minute (RPM) and a rotational force (torque) of the driving unit 150.

In one embodiment, the traveling unit 140 may include four wheels. In one embodiment, two of the four wheels may be front wheels and may be driven by the driving unit 150 in a state in which a rotation axis thereof is fixed, and the remaining two of the four wheels may be rear wheels of which a rotation axis may be changed according to a movement direction by a connector. That is, the front wheels may be driven by the driving unit 150 with no degree of freedom to move the cart. The rear wheels may be driven by the driving of the front wheel with a degree of freedom, and the posture thereof may be changed by the connector so that the rotation axis thereof may be changed perpendicular to a movement direction. However, the structure and function of the wheels are not limited thereto, and the wheels may have a more diverse structure and function according to mechanical design requests.

According to one embodiment, the traveling unit 140 may include a first traveling unit 141 and a second traveling unit 142. As a specific example, as shown in FIG. 5, the traveling unit 140 may include the first traveling unit 141 and the second traveling unit 142 that allow traveling related to each of a left side and a right side of the body 110. In an embodiment, a movement direction of the charging cart 100 may be controlled as different driving forces or rotational forces are transmitted to the first traveling unit 141 and the second traveling unit 142. As a specific example, more driving force may be applied to the second traveling unit 142 than the first traveling unit 141, and thus the second traveling unit 142 may turn more than the first traveling unit 141. Accordingly, a moving distance of the right side is longer than that of the left side so that the charging cart 100 may be moved to turn in a left direction. The driving force and RPM applied to each traveling unit described above are merely examples, and the present invention is not limited thereto.

According to one embodiment of the present invention, the charging cart 100 may include the driving unit 150 that applies a driving force to the traveling unit 140. The driving unit 150 is a device that converts electrical energy into mechanical energy using a force received by a conductor, through which a current flows, in a magnetic field, and may be, for example, an electric motor (for example, a motor). In an embodiment, the driving unit 150 may apply a driving force to the wheels to rotate the wheels. In this case, the RPM and rotational force of the driving unit 150 may be controlled by the control unit. Various types of motors may be used in the driving unit 150. For example, the motor may be an in-wheel motor, but is not limited thereto.

Since the driving unit 150 is connected to the traveling unit 140 and provided in an area inside the body 110, a rotational force may be applied to the traveling unit 140. In an embodiment, since the traveling unit 140 is driven by power generated through the driving unit 150, a force applied by a user to move the body 110 may be minimized. In other words, when the user wants to move the body 110, the user can easily move the body 110 without applying much force through a driving force generated by the driving unit 150 so that convenience can be improved.

According to one embodiment, the driving unit 150 may be driven under the control of the control unit 190. For example, the control unit 190 may control the driving unit 150 to determine the movement speed and direction of the charging cart 100. As a specific example, the control unit 190 may control the rotational force of the driving unit (for example, the motor) to determine the movement speed of the charging cart 100. As another example, the control unit 190 may control the driving unit 150 to provide different driving forces or rotational forces to the first traveling unit 141 and the second traveling unit 142 to determine a movement direction. Here, each of the first traveling unit 141 and the second traveling unit 142 may be related to traveling of one of the left side and the right side of the body 110. That is, the driving unit 150 may adjust the movement speed differently between the left side and the right side by the control unit 190 to determine a movement direction (or a traveling direction) of the charging cart 100.

According to one embodiment of the present invention, the charging cart 100 may include the sensor unit 160 that acquires sensing information corresponding to an external force related to contact with a user's body. According to one embodiment, when the user applies an external force to control the movement of the charging cart 100, the sensor unit 160 may acquire sensing information related to the applied external force. In this case, the sensing information acquired by the sensor unit 160 may be related to the user's operation intention related to the movement of the charging cart 100. The control unit 190 may determine the user's control intention through the sensing information of the sensor unit 160 and control the driving unit 150, thereby providing convenience in moving the charging cart 100.

The sensor unit 160 according to one embodiment of the present invention may be a rod-shaped load cell and may measure the direction and magnitude of an applied external force. Meanwhile, the sensor unit 160 may be a multi-axis force sensor or piezo sensor. Any sensor that can measure the direction and magnitude of a force applied to the handle or body may be applied as the sensor unit 160.

That is, the sensor unit 160 may acquire sensing information related to a user's external force to ascertain the user's operation intention related to the charging cart 100. According to an embodiment, the sensor unit 160 may be provided through a load cell that detects the direction and intensity of a force applied by the user.

In an embodiment, when a pulling or pushing force is applied in one direction, a strain gauge changes slightly, and based on the change, sensing information related to the direction and intensity of a force may be acquired. That is, the sensor unit 160 may sense the direction and intensity of a force through the load cell to acquire sensing information related to a user's operation intention.

In an embodiment, the sensor unit 160 may be provided to be connected to the handle 130. Specifically, the sensor unit 160 may be provided in the handle 130 with which a user's body comes into contact and thus may acquire sensing information related to at least one of the intensity and direction of an external force applied by the user. Here, the handle 130 may be disposed at an upper end portion of the body 110 and may be a member with which the user's body comes into contact.

In an embodiment, the load cell constituting the sensor unit 160 may be provided to be connected to the handle 130 as shown in FIG. 4. The sensor unit 160 may include a first sensor unit 161 and a second sensor unit 162, each connected to one of both ends of the handle 130. Sensing information acquired by the sensor unit 160 may include rotation calculation information and speed calculation information. Specifically, the sensing information may include rotation calculation information generated based on a difference in size between first sensing information acquired through the first sensor unit 161 and second sensing information acquired through the second sensor unit 162. For example, when the first sensing information is greater than the second sensing information (that is, when a pressure applied to the first sensor unit is greater than a pressure applied to the second sensor unit), rotation calculation information related to a right turn may be generated. The detailed description of the size of each piece of sensing information described above is merely an example, and the present invention is not limited thereto. In addition, the sensing information may include speed calculation information generated based on a size of the sensing information acquired from each of the first sensor unit 161 and the second sensor unit 162. For example, as the size of each piece of sensing information becomes larger, faster speed calculation information may be generated, and as the size of each piece of sensing information becomes smaller, relatively slow speed calculation information may be generated. In other words, speed calculation information can be generated according to a magnitude of pressure applied to each sensor unit.

That is, the sensor unit 160 may acquire sensing information related to a force applied while a user is holding the handle 130. The control unit 190 may determine the user's operation intention based on the sensing information sensed by the sensor unit and control the driving unit 150 based on the user's operation intention to control the movement speed and direction of the charging cart 100. A method in which the control unit controls the movement of the charging cart based on sensing information will be described in more detail below.

According to one embodiment of the present invention, the charging cart 100 may include the detection unit 170 that acquires traveling state information. Here, the traveling state information may be information about whether the charging cart 100 is in a drivable state. That is, the detection unit 170 may acquire traveling state information related to whether the charging cart 100 is currently capable of traveling. In an embodiment, the detection unit 170 may be provided to check whether a user's body (for example, a hand) is in contact with the handle 130. For example, the detection unit 170 may detect whether the user's hand is in contact with the handle 130.

Since the charging cart 100 of the present invention includes various components for charging the electric vehicle 11, the charging cart 100 may be provided to have a heavy weight (for example, about 700 kg). According to an embodiment of the present invention, since the charging cart 100 is provided to have a heavy weight, the detection unit 170 may be provided to determine whether the charging cart is capable of traveling.

As a specific example, when the charging cart 100 is provided to include only the sensor unit 160 for operating traveling (that is, when the detection unit is not provided), even when a user releases a pressure applied to the sensor unit 160 (that is, takes the hand holding the handle off to stop the movement of the charging cart 100), since a heavy load of about 700 kg is applied to the load cell constituting the sensor unit 160, the load cell may not return completely in a short time (that is, the strain gauge may not return), and thus the charging cart 100 may not stop immediately.

Such an error may be eliminated through software correction such as correction of a sensing value that serves as a threshold standard, that is, calibration. However, accurate calculation may be difficult because information such as a size or duration of a sensing value is different according to various situations. Accordingly, when the charging cart 100 is continuously used, erroneous sensing information that is different from a user's intention is obtained, resulting in a risk due to stability.

Meanwhile, when the charging cart 100 is positioned in an inclined place, even when a pressure is not applied from the sensor unit 160, the charging cart 100 may move along a slope. Since the charging cart 100 is quite heavy, when the charging cart 100 is unintentionally moved along a slope, a serious accident may occur. In order to prevent such dangerous situations in advance, the charging cart 100 of the present invention may further include additional components such as the detection unit.

Specifically, as shown in FIGS. 6 to 8, in addition to the sensor unit 160, the charging cart 100 of the present invention may include separate modules, that is, the detection unit 170, to acquire traveling state information that serves as a standard for determining whether the current charging cart 100 is suitable for traveling. That is, the charging cart 100 of the present invention may include an additional hardware module (that is, the detection unit), and thus the detection unit may more accurately determine whether the charging cart 100 is in a drivable state as compared with the sensor unit 160 which determines only the direction and intensity of a force. For example, when a user suddenly lets go of the handle 130 of the charging cart 100, the detection unit 170 detects that a user's body is separated from the charging cart 100, and therefore urgently stops the cart to ensure stability. There is an advantage in that the detection unit 170 may stop the charging cart 100 from moving even on flat ground, but the detection unit 170 is more effective on a slope. A more detailed description of the detection unit 170 will be provided below with reference to FIGS. 6 to 8.

According to one embodiment of the present invention, the detection unit 170 may include a piezoelectric sensor module 171 that is provided in the handle 130 and detects physical pressure. For example, as shown in FIG. 6, the piezoelectric sensor module 171 may be provided in the form of two piezoelectric sensors on a left side and a right side of the handle 130. In this case, the handle 130 is provided to have a hollow cylindrical shape, and a power line related to power or a connection line for electrical connection with the control unit 190 is connected to each proximity sensor in the empty space of the cylindrical space. Here, the piezoelectric sensor module 171 may be a sensor that determines only whether there is contact with a user's body, rather than detecting the intensity and direction of a force applied by a user. Meanwhile, information that a user has come into contact with the handle acquired from the piezoelectric sensor module 171 may be used as a prerequisite for operating the traveling unit and the driving unit.

According to another embodiment of the present invention, the detection unit 170 may include a proximity sensor module 172, which emits an electromagnetic field or electromagnetic waves and detects a response related to the electromagnetic field or the electromagnetic waves, outside the handle 130. In this case, as shown in FIG. 7, the proximity sensor module 172 may be formed to protrude from one area of an upper end portion of the body 110 to emit an electromagnetic field or electromagnetic waves toward the handle 130. That is, the proximity sensor module 172 may emit an electromagnetic field or electromagnetic waves toward the handle 130 and may acquire information about whether a user's body is positioned at a corresponding position (that is, the handle) through a response thereto.

According to another embodiment of the present invention, the detection unit 170 may include a camera module 173 that acquires image information related to a user and generates traveling state information based on the acquired image information. In this case, as shown in FIG. 8, the camera module 173 may be installed in a direction in which a user is positioned to acquire image information related to the user. For example, the image information acquired by the camera module 173 may be a standard for determining whether a distance between the user's body and the charging cart 100 is closer than a certain level. As a specific example, the camera module 173 may acquire image information related to the handle 130 and determine whether the user's hand is holding the handle 130, thereby acquiring traveling state information related to whether traveling is possible.

In an additional embodiment, the detection unit 170 may acquire an image related to a user's face through the camera module 173 and may also detect whether the charging cart 100 is in a drivable state through facial recognition based on the acquired image. In this case, only certain preset users may be permitted to use the charging cart 100.

The detection unit 170 may include at least one of the piezoelectric sensor module, the proximity sensor module, and the camera module, or all three may be applied simultaneously. In addition, the detection unit 170 is a component that may determine whether a user is holding the handle or is able to immediately grasp the handle and may correspond to an infrared light receiving sensor, an illumination sensor, or the like. Likewise, the infrared light receiving sensor or the illumination sensor may also be applied along with the piezoelectric sensor module, the proximity sensor module, and the camera module.

That is, in order to clearly recognize a user's operation intention, separate from the sensor unit 160 which detects the intensity and direction of an external force applied by the user, the charging cart of the present invention may include the detection unit 170 that detects a response to electromagnetic waves or analyzes an image to detect whether there is contact between the charging cart 100 and the user's body. Accordingly, when the user's body deviates from the charging cart 100 (for example, when the user lets go of the handle), the situation is immediately detected through the detection unit 170 and the charging cart 100 is urgently stopped, thereby improving stability.

In summary, when only the intensity of an external force is detected to control the movement of the charging cart 100 which has a relatively heavy weight, it is difficult for the sensor unit to immediately respond and stability may not be secured. For example, in the case of a downhill road, even when a user does not apply a force to a corresponding device, since a heavy weight is applied, the sensor unit (that is, the load cell) may not immediately sense a corresponding situation (that is, a situation in which a force is not applied). In addition, during a process of continuously using the charging cart 100, the load cell constituting the sensor unit 160 may become slightly bent from its initial state, and thus sensing information may not be 0. In this case, periodic calibration may be required for the sensor unit 160 to determine whether there is contact between the user's body and the charging cart 100. Accordingly, in the present invention, the detection unit 170 is separately provided to acquire information about a drivable state, thereby controlling the movement of the charging cart 100 with high accuracy. That is, in addition to the sensor unit 160, the detection unit 170 is additionally provided, and thus when the charging cart 100 moves, emergency braking may be quickly and accurately performed on the charging cart 100, thereby securing improved stability.

That is, in addition to the sensor unit 160, the detection unit 170 is additionally provided, and thus when the charging cart 100 moves, emergency braking may be quickly and accurately performed on the charging cart 100, thereby securing improved stability.

According to one embodiment of the present invention, the charging cart 100 may further include the traveling image acquisition unit 180 that acquires traveling image information related to the movement of the body 110. According to one embodiment, the traveling image acquisition unit 180 may be provided as a camera module. For example, as shown in FIG. 3, the traveling image acquisition unit 180 may be provided on a front surface of the charging cart 100 to acquire traveling image information related to the traveling or movement of the charging cart 100. In an additional embodiment, a plurality of traveling image acquisition units 180 may be provided in various areas of the body 110, and thus panoramic image information related to the movement of the body 110 may be acquired. The panoramic image information may be image information in which images with a view angle that is greater than or equal to a general viewing angle are captured through a plurality of cameras, and the captured images are combined to secure a wider viewing angle (for example, a 360-degree field of view). For example, a panoramic video image may be a video image related to a synthesized circular view from above.

According to an additional embodiment, the charging cart 100 may further include an obstacle sensor. The obstacle sensor may sense an obstacle, generate information about the obstacle, and generate an obstacle stop signal. The information about the obstacle may be present in various ways. As an example, the information about the obstacle may be three-dimensional information about the obstacle, but is not limited thereto.

The three-dimensional information about the obstacle may be depth information about a distance between the charging cart 100 and the obstacle or a shape or size of the obstacle, but is not limited thereto. Furthermore, the obstacle sensor may also generate the three-dimensional information about the obstacle in a time series manner. Various types of sensors may be used as the obstacle sensor. For example, a LiDAR, an ultrasonic sensor, a three-dimensional (3D) camera module, a red, green, blue, and distance (RGBD) camera module, and a Kinect may be used as the obstacle sensor, but the present invention is not limited thereto.

According to one embodiment of the present invention, the charging cart 100 may include the control unit 190 that controls the driving unit 150. According to one embodiment, the control unit 190 may typically manage the overall operation of the charging cart. The control unit 190 may process signals, data, information, and the like input or output through the above-described components or may run application programs stored in a memory to provide appropriate information or functions to connected terminals (for example, a user terminal or administrator terminal) or process the information or functions.

For example, the control unit 190 may be electrically connected to the handle 130 to receive driving information, stop signals, and the like. In addition, the control unit 190 may be electrically connected to the obstacle sensor to receive an obstacle stop signal. In an additional embodiment, the control unit 190 may be electrically connected to a bumper to receive an impact stop signal.

The control unit 190 may control the movement of the charging cart 100 by controlling the driving unit 150 or a brake based on at least one of traveling information related to movement or stop, an obstacle stop signal, and an impact stop signal.

According to one embodiment, the control unit 190 may control the driving unit 150 based on sensing information acquired through the sensor unit 160 and traveling state information obtained through the detection unit 170.

The sensing information acquired by the sensor unit 160 may include rotation calculation information and speed calculation information. Specifically, the sensing information may include rotation calculation information generated based on a size difference between the first sensing information acquired through the first sensor unit 161 and the second sensing information acquired through the second sensor unit 162. For example, when the first sensing information is greater than the second sensing information (that is, when a pressure applied to the first sensor unit is greater than a pressure applied to the second sensor unit), rotation calculation information related to a right turn may be generated. The detailed description of the size of each piece of sensing information described above is merely an example, and the present invention is not limited thereto. In addition, the sensing information may include speed calculation information generated based on a size of the sensing information acquired from each of the first sensor unit 161 and the second sensor unit 162. For example, as the size of each piece of sensing information becomes larger, faster speed calculation information may be generated, and as the size of each piece of sensing information becomes smaller, relatively slow speed calculation information may be generated. In other words, speed calculation information can be generated according to a magnitude of pressure applied to each sensor unit.

As an example, when sensing information (that is, speed calculation information) indicating that a user uniformly applies forces to the handle 130 forward with both hands is acquired, the control unit 190 may control the driving unit 150 such that the traveling unit 140 travels at a specific speed. In an embodiment, the first traveling unit 141 and the second traveling unit 142 may be driven at the same RPM and rotational force, and the RPM and rotational force thereof may be determined (the movement speed may be determined) according to a force applied by a user.

In an embodiment, the control unit 190 may control the driving unit based on rotation calculation information such that power applied to the first traveling unit 141 is different from power applied to the second traveling unit 142. For example, when a user applies a force to the handle 130 forward to be biased toward a left hand between the user's hands, rotation calculation information related to a right turn may be acquired through the sensor unit 160. In this case, the control unit 190 may control the driving unit 150 to make a right turn and travel at a specific speed. Here, the RPM and rotational force of the first traveling unit 141 may be greater than the RPM and rotational force of the second traveling unit 142, and the RPM and rotational force thereof may be determined (the movement speed may be determined) according to a force applied by the user. That is, the control unit 190 may determine the RPM and rotational force of each traveling unit 140 differently through rotation calculation information corresponding to a difference in size of sensing information acquired from each sensor unit (for example, each of the first sensor unit and the second sensor unit). In an additional embodiment, when sensing information indicating that a user takes both hands off the handle 130 is acquired, the control unit 190 may control the driving unit 150 to stop the charging cart 100.

According to one embodiment of the present invention, the control unit 190 may control the driving unit 150 by reflecting traveling state information with preference over sensing information. In order to clearly recognize a user's operation intention, separate from the sensor unit 160 which detects the intensity and direction of an external force applied by the user, the charging cart 100 of the present invention may include the detection unit 170 that detects a response to electromagnetic waves or analyzes an image to detect whether there is contact between the charging cart 100 and the user's body. Accordingly, when the user's body deviates from the charging cart 100 (for example, when the user lets go of the handle), the situation is immediately detected through the detection unit 170 and the charging cart 100 is urgently stopped, thereby improving stability.

For example, in a state in which the speed of the charging cart 100 is a certain level or more, when the sensing information applied through the sensor unit 160 and/or the detection unit 170 becomes 0 or a user's hand is not detected on the handle 130, the control unit may stop the charging cart 100 using a brake system of the driving unit 150 and the traveling unit 140. However, the user may temporarily take a hand off the handle 130 or a force applied from the sensor unit 160 may become 0. In this case, when the driving unit 150 and the traveling unit 140 are stopped at once, a more dangerous situation may occur. In this case, when it is confirmed that a user is close to the charging cart 100 using the camera module 173 or the like, the charging cart 100 may be controlled to generate only a warning alarm, or after a certain time, a warning alarm may be generated, or emergency stop of the charging cart 100 may be performed.

That is, in the present invention, the detection unit 170 is separately provided to obtain traveling state information, the driving unit 150 is controlled by reflecting the traveling state information with preference over sensing information acquired by the sensor unit 160, thereby controlling the movement of the charging cart 100 with high accuracy. That is, since the movement of the charging cart 100 is controlled by reflecting the traveling state information acquired through the detection unit 170 with preference over the sensing information acquired by the sensor unit 160, when the charging cart 100 moves, fast and accurate emergency braking is enabled to secure improved safety.

According to one embodiment, the control unit 190 may generate risk detection information by analyzing an image of traveling image information. For example, the control unit 190 may perform image analysis based on traveling image information using an artificial intelligence model. The artificial intelligence model may be a model that detects unexpected situations such as vehicle traveling or the appearance of pedestrians through image analysis. In an embodiment, the control unit 190 may restrict the movement of the charging cart 100 by controlling the driving unit 150 for a certain time in response to risk detection information generation. In addition, in an embodiment, in response to risk detection information generation, the control unit 190 applies vibrations to the handle 130 or provides a notification related to risk detection through an audio output unit (not shown) or a display, thereby providing cognitive information related to a traveling situation to a user.

For example, when an obstacle sufficient to impede the smooth movement of the charging cart 100 is detected on a movement path by the obstacle sensor or an obstacle or unexpected situation is detected from traveling image information, the control unit may stop the operation of the driving unit 150, or the brake system provided in the traveling unit 140 may be operated. When a user is operating the charging cart 100 while holding the handle 130, vibrations may be first transmitted to the handle 130, or other alarm functions may be used to make the user aware of the presence of an obstacle. However, in some cases, when a user does not stop operating despite having been notified of the presence of an obstacle in various ways and the obstacle enters a certain radius of the charging cart 100, the control unit stops the operation of the driving unit 150 or forcibly operates the brake system provided in the traveling unit 140.

In an additional embodiment, the traveling image information may include panoramic image information in which images with a view angle that is greater than or equal to a general viewing angle are captured through a plurality of cameras, and the captured images are combined to secure a wider viewing angle (for example, a 360-degree field of view). When image analysis is performed based on the panoramic image information, image analysis information about a wider field of view related to a traveling environment may be provided so that a range of risk detection can be further confirmed to improve stability.

Although embodiments of the present invention have been described above with reference to the accompanying drawings, those skilled in the art may understand that the present invention may be embodied in other specific forms without changing the technical spirit or essential features thereof. Accordingly, it should be understood that the above-described embodiments are exemplary in all respects and not restrictive.

The specific implementations described in the present invention are embodiments and do not limit the scope of the present invention in any way. For brevity of the specification, disclosure of conventional electronic components, control systems, software, and other functional aspects of the systems may be omitted. In addition, the connection or connection members of the lines between the components shown in the drawings exemplarily represent functional connections and/or physical or circuit connections, and in an actual device, may be referred to as various functional connections, physical connections, or circuit connections which can be replaced or added. In addition, unless there is a specific mention such as "essential," "importantly," or the like, they may not be necessary components for the application of the present invention.

It will be understood that the specific order or hierarchy of steps in the presented processes is an example of exemplary approaches. Based on design priorities, it will be understood that the specific order or hierarchy of steps in the processes may be rearranged within the scope of the present invention. The accompanying method claims present elements of the various steps in a sample order, but are not meant to be limited to the presented specific order or hierarchy.

The description of the presented embodiments is provided so that those skilled in the art may use or carry out the present invention. Various modifications for these embodiments will be readily apparent to those skilled in the art, and the general principles defined herein may be applied to other embodiments without departing from the scope of the present invention. Accordingly, the present invention is not limited to the embodiments presented herein, but should be understood in the widest scope consistent with the principles and novel features presented herein.

### [Description of reference numerals]

| | | | |
|---|---|---|---|
| 10: | user terminal | | |
| 11: | electric vehicle | | |
| 100: | charging cart | | |
| 200: | management server | | |
| 110: | body | 120: | charging unit |
| 130: | handle | 140: | traveling unit |
| 141: | first traveling unit | 142: | second traveling unit |
| 150: | driving unit | 160: | sensor unit |
| 161: | first sensor unit | 162: | second sensor unit |
| 170: | detection unit | 171: | piezoelectric sensor module |
| 172: | proximity sensor module | 173: | camera module |
| 180: | traveling image acquisition unit | 190: | control unit |

### [Modes of the Invention]

The related content has been described in the best mode for carrying out the present invention as described above.

### [Industrial Applicability]

The present invention can be used in fields where services are provided using heavy carts.

## Claims

1. A charging cart for charging an electric vehicle, the charging cart comprising:
a body;
a sensor unit connected to the body and configured to collect external force sensing information;
a handle connected to the sensor unit;
a detection unit configured to acquire traveling state information of the body;
a traveling unit connected to the body;
a driving unit configured to apply a driving force to the traveling unit; and
a control unit configured to control whether to move the body based on the external force sensing information and the traveling state information.

2. The charging cart of claim 1, wherein the control unit controls the driving unit by reflecting the driving state information with preference over the external force sensing information.

3. The charging cart of claim 1, wherein the sensor unit includes a first sensor unit and a second sensor unit that are individually connected to both ends of the handle, and
the external force sensing information includes rotation calculation information generated based on a size difference between first sensing information acquired through the first sensor unit and second sensing information acquired through the second sensor unit and speed calculation information generated based on a size of each piece of sensing information.

4. The charging cart of claim 3, wherein the control unit controls the driving unit or the traveling unit based on the rotation calculation information and the speed calculation information.

5. The charting cart of claim 4, wherein the traveling unit includes a first traveling unit and a second traveling unit configured to allow traveling related to each of a left side and a right side of the body, and
the control unit controls the driving unit based on the rotation calculation such that power applied to the first traveling unit is different from power applied to the second traveling unit.

6. The charging cart of claim 1, wherein the detection unit includes a piezoelectric sensor module provided in the handle to detect a physical pressure, and a proximity sensor module provided in the handle or outside the handle to detect electromagnetic waves reflected after being emitted toward a user.

7. The charging cart of claim 1, wherein the detection unit includes a camera module that acquires image information related to a user and generates the traveling state information based on the acquired image information.

8. The charging cart of claim 1, further comprising a traveling image acquisition unit configured to acquire traveling image information related to movement of the body,
wherein the control unit generates risk detection information by analyzing an image of the driving image information.

9. The charging cart of claim 8, wherein the control unit controls the driving unit or the traveling unit by reflecting the risk detection information with preference over the traveling state information.

10. The charging cart of claim 1, wherein the detection unit includes a piezoelectric sensor module provided in the handle to detect physical pressure, or a proximity sensor module provided in the handle or outside the handle to detect electromagnetic waves reflected after being emitted toward a user, and
when the external force sensing information is continuously detected from the sensor unit but a signal detected from the piezoelectric sensor module or the proximity sensor module disappears, the control unit stops an operation of the driving unit or the traveling unit or lowers power.
